# EUROPÄISCHE PATENTSCHRIFT

(11) **EP 2 621 981 B1**
(45) Veröffentlichungstag und Bekanntmachung des Hinweises auf die Patenterteilung: **29.11.2017**
(21) Anmeldenummer: 11761045.1
(22) Anmeldetag: 16.09.2011
(51) Int. Cl.: C08G 18/10, C08G 18/42, C08G 18/48, C08G 18/71, C09D 175/08, C08L 33/12, C08L 67/02

(54) **POLYURETHAN-SCHMELZKLEBSTOFF AUS POLYACRYLATEN UND POLYESTERN**
POLYURETHANE HOT-MELT ADHESIVE PRODUCED FROM POLYACRYLATES AND POLYESTERS
ADHÉSIF FUSIBLE POLYURÉTHANNE PRODUIT À PARTIR DE POLYACRYLATES ET DE POLYESTERS

(30) Priorität: 01.10.2010 DE 102010041854
(43) Veröffentlichungstag der Anmeldung: 07.08.2013
(73) Patentinhaber: Henkel AG & Co. KGaA, 40589 Düsseldorf (DE)
(72) Erfinder: KREBS, Michael, 40724 Hilden (DE); FRANKEN, Uwe, 41542 Dormagen (DE)
(86) Internationale Anmeldenummer: PCT/EP2011/066095
(87) Internationale Veröffentlichungsnummer: WO 2012/041719

(56) Entgegenhaltungen:
- EP-A1- 0 484 761
- EP-A1- 1 036 103
- WO-A1-2008/076146
- US-A- 5 021 507

## Beschreibung

Die Erfindung betrifft Polyurethanklebstoffe mit guter Anfangsfestigkeit und niedriger Applikationsviskosität, die zusätzlich Polyacrylate enthalten. Weiterhin sollen diese Klebstoffe nicht reaktive Polyester enthalten.

Schmelzklebstoffe sind allgemein bekannt. Dabei kann es sich um nicht reaktive thermoplastische Klebstoffe handeln, es sind auch reaktive Klebstoffe bekannt. Dabei handelt es sich häufig um über NCO-Gruppen vernetzende Systeme. Es ist bekannt, dass mit einer höheren Applikationsviskosität auch eine verbesserte Anfangsstärke der Verklebung zu erhalten ist. Senkt man die Viskosität durch Zugabe von Weichmachern, wird die Kohäsion allgemein verschlechtert. Erhöht man die Applikationstemperatur, werden der Klebstoff und das Substrat stärker belastet. Auch ist der Energieaufwand höher. Da es sich um reaktive Systeme handelt, ist besonders die Belastung mit monomeren Diisocyanaten bei der Verarbeitung bei höheren Temperaturen kritisch. Erhöht man das Molekulargewicht des Prepolymeren durch Umsetzen mit kettenverlängernden Substanzen, steigt die Anfangsfestigkeit der Verklebung, aber auch die Viskosität. Es ist aber ein gewünschtes Ziel, eine niedrige Viskosität bei einer niedrigen Applikationstemperatur zu erhalten.

WO 91/15530 beschreibt einen Schmelzklebstoff, der als Bestandteil ein NCOgruppenhaltiges Prepolymer enthält sowie ein Polyether-Polyester, das keine NCO Gruppen aufweist. Das Prepolymer wird auf übliche Weise hergestellt, deswegen ist es bekannt, dass diese Prepolymere einen signifikanten Anteil an monomeren Isocyanaten enthalten. Die Block-Polyether-Polyester werden als Umsetzungsprodukte von Diolen und Dicarbonsäuren beschrieben. Die werden also mit den NCO-Gruppen des Prepolymeren reagieren. Eine Verminderung der der funktionellen Gruppen wird nicht beschrieben.

WO 01/46330 beschreibt Schmelzklebstoffe, die ein reaktives PU-Prepolymer umfassen sowie ein weiteres Prepolymer, das aus Polyether-Polyester-Polyolen besteht, wobei diese mit Diisocyanaten im Überschuss abreagiert worden sind zu NCO-Prepolymeren.

Die DE 4035280 beschreibt Schmelzklebstoffe, die mehr als 70% Prepolymere mit NCO-Gruppen auf Basis von Polyesterdiolen enthalten, sowie bis zu 30 % Polyester, die nur bis zu 0,5 aktive H-Atomen pro Molekül aufweisen.

WO 99/28363 beschreibt Schmelzklebstoffe, die ein reaktives PU-Prepolymer umfassen sowie ein weiteres Acrylatprepolymer mit NCO-Gruppen, zusätzlich zu verschiedenen Additiven. Vernetzende oder nicht vernetzende weitere Polyester sind nicht beschrieben.

Die im Stand der Technik beschrieben Klebstoffe haben verschiedene Nachteile. Durch die Reaktion mit einem Überschuss an monomeren Isocyanaten sind diese in dem Klebstoff noch enthalten, dabei senken sie vorteilhafteniveise die Viskosität. Es ist aber bekannt das Monomere bei der Verarbeitung in die Atmosphäre übergehen und so Probleme beim Arbeitschutz auftreten. Deswegen sollten solche Monomere vermindert werden. Weiterhin führt eine Reaktion der reaktiven Gruppen von polyfunktionellen Polymeren mit den Prepolymeren zu einem Molekulargewichtsaufbau und so zu einer Viskositätserhöhung. Das ergibt dann eine schlechtere Verarbeitung der Klebstoffe.

Es ist deswegen Aufgabe der vorliegenden Erfindung einen Schmelzklebstoff bereit zu stellen, der in monomerarmer Form angewendet werden kann, dabei aber eine niedrige Applikationsviskosität aufweist. Weiterhin soll der Klebstoff beim Verkleben einen schnellen Haftungsaufbau sicherstellen.

Die Aufgabe wird gelöst durch eine lösemittelfreie feuchtigkeitshärtende Polyurethan-Schmelzklebstoff-Zusammensetzung, wobei der Klebstoff aus den Bestandteilen besteht a) 20 bis 85 Gew.-% eines Polyurethan-Prepolymers mit freien Isocyanatgruppen, hergestellt aus mindestens einem Polyol aus der Gruppe der Polyetherpolyole, Polyesterpolyole, Polyalkylenpolyole und deren Gemischen, sowie einem molaren Überschuss von mindestens einem Polyisocyanat, mit einem Gehalt des Prepolymeren an monomerem Diisocyanat unter 1 Gew.%, b) 4 bis 40 Gew.-% mindestens eines Acrylat(co)polymeren mit einem Molekulargewicht unter 60 000 g/mol, c) 3 bis 35 Gew.-% eines thermoplastischen Polyesters mit einem zahlenmittleren Molekulargewicht (M_{N}) unter 6000 g/mol, der weniger als 1,4 mit NCO reaktiven Gruppen aufweist, und d) 0 bis 25 Gew.-% mindestens eines Additivs aus der Gruppe der Katalysatoren, Harze, Weichmacher, Füller, Pigmente, Stabilisatoren oder Haftvermittler, wobei die Summe aus a) bis d) 100 Gew.-% ergibt.

Die erfindungsgemäß geeigneten Prepolymere mit Isocyanatgruppen können nach an sich bekannten Verfahren durch Umsetzung von Polyolen mit einem Überschuss an Di- und/oder Triisocyanaten hergestellt werden. Durch die Menge der Isocyanate kann die Bildung von unerwünschten hochmolekularen oder verzweigten Nebenprodukten vermindert werden. In einer Ausführungsform können so Prepolymere entstehen, die ein Polyolrückgrat aufweisen und endständig reaktive NCO-Gruppen tragen.

Im Rahmen der Erfindung sind eine Vielzahl von mehrfunktionellen Alkoholen zur Synthese der Prepolymere geeignet. Diese sollen 2 bis 10, insbesondere von 2 oder 3 OH-Gruppen, pro Molekül aufweisen. Bei den Polyolen mit mehreren OH-Gruppen kann es sich um solche handeln, die endständig OH-Gruppen tragen oder es können Polyole sein, die über die Kette verteilt seitenständig OH-Gruppen aufweisen. Bei den OH-Gruppen handelt es sich um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Polyole sind solche auf Basis von Polyethern, Polyestern oder Polyalkylenen.

Insbesondere geeignet sind Polyetherpolyole als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxydiphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylen-oxiden zu Polyetherpolyolen geeignet. Weitere, im Rahmen der Erfindung geeignete Polyole entstehen durch Polymerisation von Tetrahydrofuran (Poly-THF). Die Polyetherpolyole werden in dem Fachmann bekannter Weise hergestellt und sind kommerziell erhältlich.

Unter den genannten Polyetherpolyolen sind die Umsetzungsprodukte von niedermolekularen Alkoholen mit Propylenoxid unter Bedingungen, bei denen teilweise sekundäre Hydroxylgruppen entstehen, besonders geeignet.

Weiterhin sind Polyesterpolyole geeignet. Derartige Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, Butandiol, Propandiol, Ethylenglykol, 1,4-Hydroxymethylcyclohexan, 2-Methyl-1,3-propandiol, Triethylenglykol, Tetraethylenglykol, Polyethylenglykol, Dipropylenglykol, Polypropylenglykol, Dibutylenglykol und Gemische solcher Alkohole.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Als Tricarbonsäuren sind bevorzugt Zitronensäure oder Trimellithsäure geeignet. Die genannten Säuren können einzeln oder als Gemische aus zwei oder mehr davon eingesetzt werden. Dem Fachmann sind solche OH-funktionelle Polyester bekannt und sie sind kommerziell erhältlich. Insbesondere geeignet sind zwei oder drei endständige OH-Gruppen aufweisende Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Ein Beispiel dafür ist auch Rizinusöl.

Weitere geeignete Polyesterpole sind Polycarbonat-Polyole. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Eine weitere Gruppe der erfindungsgemäß einsetzbaren Polyole umfassen Polyester auf der Basis von ε-Caprolacton. Es sind auch Polyesterpolyole geeignet, die in der Polymerkette eine oder mehrere Urethangruppen enthalten.

Weiterhin geeignete Polyole sind beispielsweise Alkylenpolyole mit 2 bis 6 OH-Gruppen pro Molekül. Es sind bevorzugt Alkohole mit primären und sekundären OH-Gruppen geeignet. Zu den geeigneten aliphatischen Alkoholen zählen beispielsweise Diole wie Ethylenglykol, Propylenglykol, Butandiol-1,4, Pentandiol-1,5, Hexandiol-1,6, Heptandiol-1,7, Octandiol-1,8 1,10-Decandiol, 1,12-Dodecandiol, Dimerfettalkohol und deren höhere Homologen oder Isomeren. Ebenfalls geeignet sind höherfunktionelle Alkohole wie beispielsweise Glycerin, Trimethylolethan, Pentaerythrit und/oder Trimethylolpropan, oder höher funktioneller Alkohole, wie beispielsweise Pentaerythrit. Diese können zumindest anteilig enthalten sein. Geeignete aliphatische Alkohole besitzen ein Molekulargewicht von 60 bis 400 g/mol. Insbesondere werden jedoch lineare Alkohole mit 2 bis 30 C-Atomen eingesetzt, die zwei bis zu vier OH-Gruppen aufweisen.
Die Polyole können einzeln oder im Gemisch eingesetzt werden. Dabei können sich auch gemischte PU-Prepolymere bilden.

Beispielsweise geeignet sind Polyetherpolyole und/oder Polyesterpolyole mit einem Molekulargewicht von 200 bis 5000 g/mol, vorzugsweise 400 bis 4000 g/mol (zahlenmittleres Molekulargewicht, M_{N}, gemessen über GPC). Bevorzugte Polyole sollen im Molekül 2 oder 3 OH-Gruppen aufweisen, insbesondere sind Diole geeignet, besonders bevorzugt auf Polyetherbasis.

Unter geeigneten monomeren Isocyanaten für die vorliegende Erfindung werden solche mit zwei oder mit drei NCO-Gruppen im Molekül verstanden. Es handelt sich dabei bevorzugt um die bekannten aliphatischen, cycloaliphatischen oder aromatischen monomeren Isocyanate.

Geeignete Isocyanate sind ausgewählt aus solchen mit einem Molekulargewicht von 160g/mol bis 500g/mol, beispielsweise aus der Gruppe 1,5-Naphthylendiiso-cyanat, 4,4'-Diphenylmethandiisocyanat (MDI), hydriertes oder teilhydriertes MDI (H12MDI , H6MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3-Phenylendiisocyanat, 1,4-Phenylendiisocyanat, 1-Methyl-2,4-diisocyanato-cyclohexan, 1,6-Diisocyanato-2,2,4-trimethylhexan, 1,6-Diisocya-nato-2,4,4-trimethylhexan, chlorierte und bromierte Diisocyanate, phosphorhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiisocyanat, Cyclohexan-1,4-diisocyanat, Ethylen-diisocyanat, Methylentriphenyltriisocyanat (MIT), Phthalsäure-bis-isocyanato-ethylester, Diisocyanate mit reaktionsfähigen Halogenatomen, wie 1-Chlormethylphenyl-2,4-diisocyanat, 1-Brommethyl-phenyl-2,6-diisocyanat,3,3-Bis-chlormethylether-4,4'-diphenyldiisocyanat. Weitere einsetzbare Diisocyanate sind Trimethylhexamethylendiisocyanat, 1,4-Diisocyanatobutan, 1,12-Diisocyanato-dodecan und Dimerfettsäurediisocyanat, Lysindiisocyanat, 4,4-Dicyclohexylmethandiisocyanat, 1,3-Cyclohexan- oder 1,4-Cyclohexandiisocyanat.

Geeignete Diisocyanate mit zwei NCO-Gruppen unterschiedlicher Reaktivität werden aus der Gruppe der aromatischen, aliphatischen oder cycloaliphatischen Diisocyanate ausgewählt. Beispiele für besonders geeignete aromatische Diisocyanate mit unterschiedlich reaktiven NCO-Gruppen sind die Isomere des Toluylendiisocyanats (TDI), Naphthalin-1,4-diisocyanat, 1,3-Phenylendiisocyanat oder 2,4'- Diphenylmethandiisocyanat (2,4'-MDI). Beispiele für aliphatische Diisocyanate mit unterschiedlich reaktiven NCO-Gruppen sind 1,6-Diisocyanato-2,2,4-trimethylhexan, 1,6-Diisocyanato-2,4,4-trimethylhexan und Lysindiisocyanat.

Beispiele für geeignete cycloaliphatische Diisocyanate mit unterschiedlich reaktiven NCO-Gruppen sind z.B. 1-Isocyanatomethyl-3-isocyanato-1,5,5-trimethyl-cyclohexan (Isophorondiisocyanat, IPDI), 1-Methyl-2,4-diisocyanato-cyclohexan oder 1,4 Diisocyanato-2,2,6-trimethylcyclohexan (TMCDI).

Als trifunktionelle Isocyanate geeignet sind solche Isocyanate, die durch Trimerisation oder Oligomerisation von Diisocyanaten oder durch Reaktion von Diisocyanaten mit trifunktionellen hydroxylgruppenhaltigen Verbindungen mit einem Molekulargewicht unter 300 g/mol entstehen. Beispiele dafür sind Trimerisierungsprodukte der Isocyanate HDI, MDI oder IPDI.

Aus den oben erwähnten Polyolen und Polyisocyanaten werden durch bekannte Verfahren die erfindungsgemäß geeigneten Prepolymere hergestellt. Dabei werden die Isocyanate in stöchiometrischem Überschuss mit den Polyolen umgesetzt. Das kann beispielsweise bei Raumtemperatur geschehen, es können auch erhöhte Temperaturen angewandt werden. Die Ausgangsverbindungen reagieren im Allgemeinen spontan miteinander, es kann aber auch notwendig sein, dass Katalysatoren, wie metallorganische Verbindungen oder organische Aminoverbindungen zugesetzt werden. Weiterhin können die bekannten Verfahren eingesetzt werden, um nicht umgesetzte monomere Polyisocyanate zu entfernen. Das kann beispielsweise durch Fällen oder durch Abfangen der monomeren Isocyanate geschehen. Eine bevorzugte Ausführungsform entfernt die nicht umgesetzten Monomere durch Abdestillieren der Monomere im Vakuum, beispielsweise in einem Dünnschichtverdampfer.

In einer anderen bevorzugten Ausführungsform werden zur Herstellung der Prepolymere asymmetrischen Diisocyanate verwendet. Auf diese Weise kann die selektive Reaktion der monomeren asymmetrischen Diisocyanate mit den Diolen ausgenutzt werden, so dass bei geeigneten stöchiometrischen Verhältnissen und geeigneter Reaktionsführung das Reaktionsprodukt nur einen geringen Anteil an monomeren, niedermolekularen Diisocyanaten aufweist.

Die erfindungsgemäß einsetzbaren monomerarmen PU-Prepolymere sollen einen Gehalt an monomeren, nicht umgesetzten Polyisocyanaten von unterhalb 1 Gew.-% aufweisen, insbesondere weniger als 0,1 Gew.-% (bezogen auf das Prepolymer). Die Prepolymere weisen ein Molekulargewicht von 300 bis 6000 g/mol auf, vorzugsweise kleiner als 4000, insbesondere weniger als 2000 g/mol. Die Anzahl der NCO-Gruppen sollen beispielsweise pro Molekül 2 oder 3 betragen, insbesondere 2 NCO-Gruppen. Bevorzugt enthalten die Prepolymere ausschließlich umgesetzte aromatische Diisocyanate.

Erfindungsgemäß soll der Schmelzklebstoff zusätzlich Poly(meth)acrylate und deren Copolymere enthalten geeignet. Es handelt sich beispielsweise um Copolymere von ethylenisch ungesättigten Verbindungen, wie lineare oder verzweigte C1 bis C18-Alkylester der (Meth)acrylsäure; (Meth)acrylsäure, Crotonsäure, Maleinsäure; Ester der (Meth)acrylsäure mit Glycolethern, wie Methoxyethanol, Ethoxyethanol, Polyethylenglykolmonoethern; Vinylestern, wie Vinylacetat, Vinylpropionat oder Vinylestern von verzweigten Monocarbonsäuren; oder Vinylaromate. Diese sollen keine mit Isocyanaten reaktiven Gruppen aufweisen.

In einer anderen Ausführungsform haben diese Poly(meth)acrylate aktive Wasserstoffgruppen in Form von Hydroxylgruppen, primären oder sekundären Aminogruppen, so dass diese Polymeren in die Polymermatrix des Schmelzklebstoffes chemisch mit eingebunden werden können. Üblicherweise werden die niedermolekularen Polymere durch radikalische Polymerisation bzw. Copolymerisation der vorgenannten Monomeren hergestellt. Zum Einbau der aktiven Wasserstoffgruppen können Hydroxyethyl(meth)acrylat, Hydroxypropyl(meth)acrylat, Hydroxybutyl(meth)acrylat oder Ester der Acrylsäure oder Methacrylsäure mit Glycololigomeren oder Polymeren wie z.B. Di-, Tri-, Tetra- und/oder Polyethylenglycol mit den oben genannten Monomeren copolymerisiert werden. Anstelle der vorgenannten hydroxyfunktionellen (Meth)acrylate können auch die korrespondierenden aminofunktionellen Comonomeren mitverwendet werden. Solche Poly(meth)-acrylate können in Verfahren, wie oben bereits beschrieben, mit Diisocyanaten umgesetzt werden und bilden dann Prepolymere mit NCO-Gruppen. Diese können dann dem PU-Prepolymeren zugesetzt werden.

Insbesondere sollen solche Poly(meth)acrylate ein zahlenmittleres Molekulargewicht (M_{N}) unter 60000g/mol aufweisen, insbesondere von 10000 bis 40000 g/mol. Bevorzugt werden nicht reaktive Poly(meth)acrylate eingesetzt. Insbesondere sind Poly(meth)acrylate geeignet, die eine Tg (Glasübergangstemperatur, gemessen mit DSC) über 30°C aufweisen. Diese Polymere können in Mengen von 4 bis 40 Gew-% im Klebstoff enthalten sein, insbesondere von 5 bis 20 Gew-%.

Erfindungsgemäß soll der Schmelzklebstoff mindestens einen thermoplastischen Polyester enthalten. Dabei soll das Molekulargewicht des thermoplastischen Polyesters unter 6000 g/mol betragen. Erfindungsgemäß müssen die Polyester nur eine geringe Funktionalität aufweisen, sie sollen insbesondere nicht mit dem Prepolymer reagieren. Die Menge wird so ausgewählt, dass keine beidseitige Kettenverlängerung der Prepolymere eintritt. Diese Polyester sollen im Schnitt weniger als 1,4 mit NCO-Gruppen reaktive Gruppen pro Polyesterkette enthalten, bevorzugt weniger als 1, insbesondere sollen sie im Wesentlichen frei von NCO-reaktiven Gruppen sein.

Als Polyester kommen die bekannten Polyester auf Basis von Umsetzungsprodukten von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Auch geeignete Esterderivate können eingesetzt werden. Es können die an sich bekannten Polyester eingesetzt werden. Insbesondere sind Polyester auf Basis von aliphatischen Carbonsäuren geeignet, besonders bevorzugt überwiegend lineare Polyester.

Die Funktionalität der thermoplastischen Polyester soll vermindert sein. Das kann durch verschiedene Maßnahmen erreicht werden. Beispielsweise kann bereits bei der Synthese durch Zugabe von einwertigen Alkoholen die Anzahl der OH- oder COOHhaltigen Endgruppen vermindert werden. Eine andere Arbeitsweise reduziert die Anzahl der funktionellen Gruppen der Polyester durch polymeranaloge Umsetzungen.

Beispielsweise ist es möglich, OH- oder COOH-Gruppen durch Umsetzen mit Carbonsäurehalogeniden zu vermindern. Durch die hohe Reaktivität solcher Derivate ist die Umsetzung leicht zu erreichen. Eine andere Arbeitsweise setzt vorhandene funktionelle Gruppen mit Estern oder Orthoestern um. Durch Entfernen der flüchtigen Reaktionsprodukte kann eine Reaktion unterstützt werden und die Anzahl der reaktiven Gruppen vermindert werden. Eine weitere geeignete Arbeitsweise setzt vorhandene funktionelle Gruppen mit Carbonsäureanhydriden um. Gegebenenfalls ist es auch möglich, Anteile von Lösemitteln zuzusetzen, um die Umsetzung zu erleichtern. Diese können danach gegebenenfalls zusammen mit Nebenprodukten durch Destillation im Vakuum wieder entfernt werden.

Eine bevorzugt Ausführungsform setzt vorhandene OH- oder COOH-Gruppen mit einwertigen Isocyanaten um. Insbesondere geeignet sind Monoisocyanate, wie Phenylisocyanat, Tosylisocyanat oder Stearylisocyanat. Diese können bis zu ungefähr äquimolaren Mengen (bezogen auf die OH-Gruppen) zugesetzt werden, beispielsweise mit einem NCO:OH-Verhältnis von circa 0,3:1 bis 1,02:1, insbesondere bis 0,98:1, und reagieren mit den thermoplastischen Polyestern unter Bildung von Urethangruppen. Ein Überschuss dieser monomeren Isocyanate soll vermieden werden. So kann durch die Umsetzung die Menge der mit NCO reaktiven Gruppen reduziert werden.

Die Menge der thermoplastischen Polyester soll 3 bis 35 Gew-% betragen, insbesondere von 5 bis 25 Gew.-%. Bevorzugt handelt es sich um Polyester auf Basis von kristallinen oder semikristallinen Polyesterdiolen. Eine besondere Ausführungsform setzt solche linearen Polyester ein, die auch Urethangruppen aufweisen. Beispielsweise können geeignete thermoplastische Polyester eine Urethangruppe oder insbesondere im Mittel zwei Urethangruppen enthalten.

Die erfindungsgemäßen feuchtigkeitshärtenden Schmelzklebstoffe können zusätzlich Additive enthalten beispiele dafür sind klebrigmachende Harze, haftvermittelnde Zusätze, Füllstoffe, Pigmente, Weichmacher, Stabilisatoren und/oder Katalysatoren, Wachse oder deren Mischungen sowie weitere übliche Hilfs- und Zusatzstoffe.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. Als Katalysatoren sind die bekannten metallorganischen und / oder aminischen Katalysatoren in Mengen bis zu 2 % geeignet, z.B. die metallorganische Verbindungen des Zinns, Eisens, Titans oder Wismuts wie Zinn(II)salze von Carbonsäuren oder die Dialkyl-Zinn(IV)-Carboxylate. Als Stabilisatoren dienen beispielsweise Antioxidantien, wie die handelsüblichen sterisch gehinderten Phenole und/oder Thioether und/oder substituierten Benzotriazole oder die sterisch gehinderten Amine vom Typ des HALS. In speziellen Zusammensetzungen können insbesondere auch Weichmacher zugesetzt werden. Dabei handelt es sich um nicht reaktive Weichmacher, beispielsweise um naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate oder Kohlenwasserstofföle. Typische Haftvermittler sind zum Beispiel Ethylen/Acrylamid-Comonomere, polymere Isocyanate, reaktive siliciumorganische Verbindungen oder Phosphorderivate, insbesondere sind auch Silane geeignet, die hydrolysierbare Gruppen enthalten. Pigmente und Füllstoffe können in geringen Mengen ebenfalls enthalten sein. Wachse können natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse sind geeignet. Insgesamt können die Additive bis zu 25 Gew-% im Klebstoff enthalten sein.

Ein erfindungsgemäßer Schmelzklebstoff enthält insbesondere 20 bis 85 Gew-% mindestens eines monomerarmen Prepolymeren mit einem Molekulargewicht unter 6000 g/mol, als Umsetzungsprodukt aus Polyetherdiolen, Polyesterdiolen und/oder Polyalkylendiolen und einem Überschuss von aromatischen Diisocyanaten, 4 bis 40 Gew.-% mindestens eines Poly(meth)acrylats mit einem Molekulargewicht (M_{N}) unter 60000 g/mol, 3 bis 35 Gew.-% eines thermoplastischen Polyesters mit einem Molekulargewicht (M_{N}) unter 6000 g/mol, sowie bis 25 Gew-% Additive. Dabei soll die Summe der Bestandteile 100 Gew.-% ergeben.

Ein erfindungsgemäßer Schmelzklebstoff zeichnet sich durch eine günstige Viskosität aus. Diese beträgt gemessen bei einer Temperatur zwischen 90°C bis 130°C von 4.000 mPas bis 40.000 mPas (gemessen nach EN ISO 2555, Brookfield Viskosimeter). Insbesondere soll die Viskosität gemessen bei einer Temperatur zwischen 90 bis 120°C von 4.000 bis 30.000 mPas betragen. Dabei soll der NCO-Gehalt des Klebstoffs zwischen 0,25 bis 4 Gew.-% betragen. Dabei kann die Viskosität beispielsweise durch die Auswahl der Polyester beeinflusst werden, der NCO-Gehalt durch Zusammensetzung und Menge der Prepolymeren.

Durch die Verwendung und Auswahl der erfindungsgemäßen eingesetzten thermoplastischen Polyester mit wenigen oder keinen reaktiven Gruppen kann sichergestellt werden, dass der erfindungsgemäße Klebstoff eine vorteilhafte niedrige Viskosität aufweist. Weiterhin ist durch die Auswahl des Polyesters ein erniedrigter Schmelzpunkt des Klebstoffs ermöglicht, sodass schon bei niedrigen Temperaturen eine geeignete Applikationsviskosität erhalten werden kann. Durch die Verwendung von Anteilen an Poly(meth)acrylaten wird die Anfangshaftung und die Anfangsklebkraft (green strength) des Schmelzklebstoffs verbessert.

Der erfindungsgemäße Schmelzklebstoff ist zum Verkleben von verschiedenen Substraten geeignet. Insbesondere können durch die niedrige Applikationsviskosität auch Substrate verklebt werden, die temperaturempfindlich sind. So ist eine Verklebung beispielsweise von empfindlichen Folien, Kunststoff, Papier und ähnlichen Substraten möglich. Dabei kann ein erfindungsgemäßer Klebstoff bei niedrigen Temperaturen von beispielsweise unter 150°C aufgetragen werden, insbesondere auch von 90 bis 130°C. Die Viskosität ermöglicht ein gutes Anfließen an das Substrat. Danach kühlt der Klebstoff ab, er wird fest und kristallisiert. Es bildet sich schnell eine Haftung zum Substrat aus, dabei kann das verklebte Substrat rasch weiterverarbeitet werden. Da bei der üblichen Verarbeitung der Klebstoffe diese eine längere Zeit im geschmolzenen Zustand im Vorratstank bleiben, ist es vorteilhaft, dass die Viskosität konstant dabei konstant bleibt und der Klebstoff ist weiterhin gut zu verarbeiten ist.

Der erfindungsgemäße Schmelzklebstoff weist nach dem Erkalten einen schnellen Aufbau der Haftung der Klebstoffschicht auf. Der Klebstoff kristallisiert dabei. Deswegen können mit einem Schmelzklebstoff verklebte Substrate rasch weiterverarbeitet werden, die endgültige chemische Vernetzungsreaktion unter Einfluss von Feuchtigkeit kann dabei später erfolgen. Dann baut sich die endgültige Härte und Kohäsion des erfindungsgemäßen Klebstoffs auf. Es ist eine gute Haftung zu verschiedenen Substraten gegeben. Beispielsweise ist ein erfindungsgemäßer Klebstoff zum Verkleben in der Buchbinderei geeignet. Weiterhin können erfindungsgemäße Klebstoffe zum Verkleben von Verpackungen aus Papier, Karton oder Folien eingesetzt werden.

### Beispiel 1 (Vergleich)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1, (Dodecandisäure und Hexandiol-1,6, OHZ 30) | 12,8 Teile |
| Polyester 2: (Adipinsäure und Hexandiol-1,6, OHZ 30) | 14,3 |
| Acrylat-Copolymer: (Methylmethacrylat/ n-Butylmethacrylat Copolymer, M_{N} 34000, Tg 76°C) | 8,0 |
| Kohlenwasserstoffharz (M_{N} < 1000) | 10,0 |
| Monomerarmes Prepolymer (aus PPG 750 + 4,4'-MDI; Umsetzung Polyol / Polyisocyanat bei 130°C; NCO-Gehalt: 5,9%, Monomergehalt < 0,1 %, nach Entmonomerisierung) | 55,0 |

Nach Mischen der Bestandteile in der Schmelze kann der Klebstoff in feuchtigkeitsdicht schließende Behälter abgefüllt und später eingesetzt werden.
NCO-Gehalt (Klebstoff): 2,6 %

### Beispiel 2 (Vergleich)

Analog Versuch 1 wurde hergestellt und gemischt:

| | |
|---|---|
| Polyester 1 | 14,7 TI. |
| Polyester 2 | 16,5 |
| Acrylat-Copolymer | 9,0 |
| Kohlenwasserstoffharz | 10,0 |
| Monomerarmes Prepolymer | 50,0 |

Nach Mischen kann der Klebstoff in feuchtigkeitsdicht schließende Behälter abgefüllt und später eingesetzt werden.
NCO-Gehalt: 2,3 %

### Beispiel 3 (erfindungsgemäß)

Analog Versuch 1 wurde umgesetzt:

| | |
|---|---|
| Polyester 1 | 14,7 Teile |
| Polyester 2 : (In einer Vorreaktion umgesetzt mit Stearylisocyanat; NCO:OH-Verhältnis von 0,95:1; Umsetzung der Isocyanatgruppen mit OH-gruppen bei ca. 140°C) | 16,5 |
| Acrylat-Copolymer | 11,0 |
| Monomerarmes Prepolymer | 48,0 |

Der Klebstoff in feuchtigkeitsdicht schließende Behälter abgefüllt und kann später eingesetzt werden.
NCO-Gehalt: 2,4 %

| | Viskosität 90°C | nach Alterung | offene Zeit |
|---|---|---|---|
| Versuch 1 | 11200 mPas | 14200 mPas | 60 sec |
| Versuch 2 | 18500 mPas | 25700 mPas | 50 sec |
| Versuch 3 | 7400 mPas | 8800 mPas | 20 sec |

Der erfindungsgemäße Klebstoff hat eine niedrigere Viskosität. Diese ist auch nach thermischer Belastung stabil.
Verklebungsversuche zeigen eine schnellere Festigkeit des aufgetragenen Klebstofffilms und eine kürzere offene Zeit.

Prüfmethode zur Bestimmung des Kennwertes "Offene Zeit":
Auf einer Spanplatte wird mittels einer beheizten Kartuschenpistole (130°C) eine 3mm starke Hotmeltraupe appliziert.
Nacheinander werden in definierten Zeitintervallen Buchenholzspatel in die heiße Raupe gedrückt und jeweils kurz mit einem definierten Gewicht (500 g) angepresst.

Anschließend werden die Spatel von der Spanplatte abgerissen. Als "Offene Zeit" wird die Zeit notiert, wenn an dem Buchenholzspatel kein Spanausriß mehr sichtbar ist.

Bestimmung des Alterungsverhaltens:
Der Klebstoff wird 8 h bei 90°C gehalten. Danach wird die Viskosität erneut gemessen.

## Patentansprüche

1. Lösemittelfreie feuchtigkeitshärtende Polyurethan-Schmelzklebstoff-Zusammensetzung, wobei der Klebstoff aus den Bestandteilen besteht:
a) 20 bis 85 Gew.-% eines Polyurethan-Präpolymeren mit freien Isocyanatgruppen, hergestellt aus mindestens einem Polyol aus der Gruppe der Polyetherpolyole, Polyesterpolyole, Polyalkylenpolyole und deren Gemischen sowie mindestens einem Polyisocyanat, mit einem Gehalt des Prepolymeren an monomeren Diisocyanaten unter 1 Gew.-%,
b) 4 bis 40 Gew.-% mindestens eines Acrylatcopolymeren mit einem Molekulargewicht (M_{N}) unter 60 000 g/mol,
c) 3 bis 35 Gew.-% mindestens eines thermoplastischen Polyesters mit einem zahlenmittleren Molekulargewicht (M_{N}) unter 6000 g/mol, der weniger als 1,4 mit NCO reaktiven Gruppen aufweist, und
d) 0 bis 25 Gew.-% mindestens eines Additivs aus der Gruppe der Katalysatoren, Harze, Weichmacher, Füller, Pigmente, Stabilisatoren oder Haftvermittler,
wobei die Summe aus a) bis d) 100 Gew.-% ergibt.

2. Zusammensetzung nach Anspruch 1, **dadurch gekennzeichnet, dass** die Viskosität gemessen bei einer Temperatur zwischen 90°C bis 130 °C von 4000 mPas bis 40000 mPas beträgt (EN ISO 2555).

3. Zusammensetzung nach einem der Ansprüche 1 oder 2, **dadurch gekennzeichnet, dass** der NCO-Gehalt der Zusammensetzung von 0,25 bis 4 Gew.-% NCO beträgt.

4. Zusammensetzung nach einem der Ansprüche 1 bis 3, **dadurch gekennzeichnet, dass** als Polyol Polyetherpolyole mit einer Funktionalität von etwa 2 eingesetzt werden.

5. Zusammensetzung nach einem der Ansprüche 1 bis 4, **dadurch gekennzeichnet, dass** als Diisocyanate aromatische Diisocyanate eingesetzt werden.

6. Zusammensetzung nach einem der Ansprüche 1 bis 5, **dadurch gekennzeichnet, dass** der Polyester im Schnitt eine oder mehrere Urethangruppen aufweist, insbesondere zwei.

7. Zusammensetzung nach einem der Ansprüche 1 bis 6, **dadurch gekennzeichnet, dass** das Acrylatcopolymere keine mit NCO-reaktive funktionelle Gruppe aufweist.

8. Zusammensetzung nach Anspruch 7, **dadurch gekennzeichnet, dass** das Acrylatcopolymere eine Glasübergangstemperatur oberhalb 30°C aufweist.

9. Zusammensetzung nach einem der Ansprüche 1 bis 8, **dadurch gekennzeichnet, dass** der Monomergehalt der Prepolymere durch Destillation auf den Wert unter 1 Gew-% vermindert wird.

## Claims

1. A solvent-free moisture-curing polyurethane hot-melt adhesive composition, wherein the adhesive consists of the following components:
a) 20 to 85 wt.% of a polyurethane prepolymer having free isocyanate groups prepared from at least one polyol from the group of polyether polyols, polyester polyols, polyalkylene polyols, and mixtures thereof and at least one polyisocyanate, the prepolymer having a monomeric diisocyanate content below 1 wt.%,
b) 4 to 40 wt.% of at least one acrylate copolymer having a molecular weight (M_{N}) below 60,000 g/mol,
c) 3 to 35 wt.% of at least one thermoplastic polyester which has a number-average molecular weight (M_{N}) below 6000 g/mol and comprises fewer than 1.4 NCO-reactive groups, and
d) 0 to 25 wt.% of at least one additive from the group of catalysts, resins, plasticizers, fillers, pigments, stabilizers or adhesion promoters, wherein the sum of a) to d) is equal to 100 wt.%.

2. The composition according to claim 1, **characterized in that** the viscosity measured at a temperature between 90°C to 130°C is 4000 mPas to 40,000 mPas (EN ISO 2555).

3. The composition according to one of claims 1 or 2, **characterized in that** the NCO content of the composition is from 0.25 to 4 wt.% NCO.

4. The composition according to one of claims 1 to 3, **characterized in that** polyether polyols having a functionality of approximately 2 are used as the polyol.

5. The composition according to one of claims 1 to 4, **characterized in that** aromatic diisocyanates are used as the diisocyanates.

6. The composition according to one of claims 1 to 5, **characterized in that** the polyester comprises on average one or more, in particular two, urethane groups.

7. The composition according to one of claims 1 to 6, **characterized in that** the acrylate copolymer does not comprise any NCO-reactive functional groups.

8. The composition according to claim 7, **characterized in that** the acrylate copolymer has a glass transition temperature above 30°C.

9. The composition according one of claims 1 to 8, **characterized in that** the monomer content of the prepolymers is decreased by distillation to a value below 1 wt.%.

## Revendications

1. Composition polyuréthane-colle thermofusible sans solvant, durcissant à l'humidité, la colle étant constituée des ingrédients suivants :
a) 20 à 85 % en poids d'un prépolymère polyuréthane comportant des groupes isocyanates libres, préparé à partir d'au moins un polyol du groupe des polyéther polyols, des polyester polyols et des polyalkylène polyols, et des mélanges de ceux-ci, ainsi que d'au moins un polyisocyanate, avec une teneur du prépolymère en diisocyanates monomères inférieure à 1 % en poids,
b) 4 à 40 % en poids d'au moins un copolymère acrylate ayant une masse molaire (M_{N}) inférieure à 60 000 g/mol,
c) 3 à 35 % en poids d'au moins un polyester thermoplastique ayant une masse molaire moyenne en nombre (M_{N}) inférieure à 6 000 g/mol qui présente moins de 1,4 groupes réagissant à NCO, et
d) 0 à 25 % en poids d'au moins un additif du groupe des catalyseurs, des résines, des plastifiants, des charges, des pigments, des stabilisateurs ou des promoteurs d'adhésion, la somme de a) à d) s'élevant à 100% en poids.

2. Composition selon la revendication 1, **caractérisée en ce que** la viscosité mesurée à une température comprise entre 90 °C et 130 °C, s'élève de 4 000 mPas à 40 000 mPas (EN ISO 2555).

3. Composition selon une des revendications 1 ou 2, **caractérisée en ce que** la teneur en NCO de la composition s'élève de 0,25 à 4 % en poids de NCO.

4. Composition selon une des revendications 1 à 3, **caractérisée en ce que** l'on utilise comme polyol des polyéther polyols avec une fonctionnalité de 2 environ.

5. Composition selon une des revendications 1 à 4, **caractérisée en ce que** l'on utilise comme diisocyanates des diisocyanates aromatiques.

6. Composition selon une des revendications 1 à 5 **caractérisée en ce que** le polyester présente en moyenne un ou plusieurs groupes uréthane, notamment deux.

7. Composition selon une des revendications 1 à 6, **caractérisée en ce que** le copolymère acrylate ne présente aucun groupe fonctionnel réagissant au NCO.

8. Composition selon la revendication 7, **caractérisée en ce que** le copolymère acrylate présente une température de transition vitreuse supérieure à 30 °C.

9. Composition selon l'une quelconque des revendications 1 à 8; **caractérisée en ce que** la teneur en monomère du prépolymère est réduite par distillation jusqu'à une valeur inférieure à 1 % en poids.
